Europäisches Patentamt

European Patent Office

Office européen des brevets

(19)

(11) Publication number: **0 108 347**
**A1**

(12) **EUROPEAN PATENT APPLICATION**

(21) Application number: **83110758.6**

(22) Date of filing: **27.10.83**

(51) Int. Cl.³: **A 01 B 63/10**
**F 15 B 13/09**

(30) Priority: **01.11.82 FI 823729**

(43) Date of publication of application:
**16.05.84 Bulletin 84/20**

(84) Designated Contracting States:
**DE FR GB SE**

(71) Applicant: **Valmet Oy**
**Punanotkonkatu 2**
**SF-00130 Helsinki 13(FI)**

(72) Inventor: **Mänttäri, Erkki**
**Hillakuja 5**
**F-40340 Jyväskylä 34(FI)**

(74) Representative: **Grams, Klaus Dieter, Dipl.-Ing. et al,**
**Patentanwaltsbüro Tiedtke-Bühling-Kinne-**
**Grupe-Pellmann-Grams-Struif Bavariaring 4**
**D-8000 München 2(DE)**

(54) Hydraulic system for a tractor or equivalent.

(57) A hydraulic system for a tractor, comprising hydraulic pumps (3,4) driven by the tractor's engine (M), their intake sides connected over an intake filter (2) to an oil tank (1). The system comprises a valve mechanism (5, 7, 8, 9, 10, 11, 13, 14, 15) by mediation of which the hydraulic pumps (3,4) have been connected to the lifting cylinder (12) of the tractor's three-point lifting attachment. The hydraulic system comprises at least two hydraulic pumps (3,4), which have been connected to be in parallel. Of these hydraulic pumps, one is a mini-pump (4) and the other is a bigger main pump (3) with an output several times the output of the mini-pump (4). The output ($Q_0$) of the mini-pump (4) is about 15 to 30% of the output ($Q_1$) of the larger pump (3). The functions controlled by the control automatics (22,23,24) and/or the functions (25) based on lifting attachment manipulation from the rear of the tractor and/or the leakage compensation of the lifting cylinder (12) have been arranged to take place under control by an electric directional valve with two magnets and using exclusively the output of the mini-pump (4). The combined outputs of both pumps (3,4) can through the main governor valve (10) be directed to the lifting cylinder (12) of the tractor's lifting attachment.

EP 0 108 347 A1

0108347

Hydraulic system for a tractor or equivalent

The present invention concerns a hydraulic system for a tractor or equivalent, comprising hydraulic pumps driven by the tractor's engine, their intake sides connected over an intake filter or equivalent to an oil tank, and said system comprising a valve mechanism by which the hydraulic pumps are connected with the tractor's three-point lifting attachment or with the respective lifting cylinder.

As known in the art, tractors commonly have one hydraulic pump, of which the output rate has to be dimensioned as determined by the maximum requirements of hydraulic power. It is also known in the art to use on tractors double pumps, which however are mostly connected directly in parallel to operate at the same time always. It is known in the art also to use on tractors so-called variable displacement pumps, but such pumps are more complex of their construction, and expensive.

Regarding the state of art tangent to the present invention, reference is made to the following patent literature: SE 346 834, GB 1,475,014 and 2,070,693 A, and US 3,952,510.

Hydraulic systems of prior art have resulted in uneconomical use of the engine power, to such extent that when from the tractor is required its maximum power output e.g. while ploughing, a considerable proportion of the power has in fact been preempted by the hydraulic system, for instance under direction by the tractor's automatic control system for the control movements of the lifting cylinder operating the tractor's lifting attachment. As a rule, however, the different kinds of actuator means in the tractor's hydraulic system, such as the lifting cylinder directed by the control automatics, the lifting cylinder's leakage compensation and/or the hydraulic steering of the tractor's wheels require only a fraction of the output from the hydraulic pump.

With a view to amending the drawbacks mentioned, the present invention is mainly characterized in that:-

the hydraulic system comprises at least two hydraulic pumps which have been connected principally in parallel,

one of said hydraulic pumps is a mini-pump and the other is a bigger main pump, the output of the latter pump being several times that of said mini-pump,

the combined outputs of both pumps are directable through a main governing valve or equivalent to the lifting cylinder of the tractor's lifting attachment, and

the functions directed by the tractor's control automatics and/or the functions based on lifting attachment manipulation from the rear of the tractor and/or the leakage compensation of the lifting cylinder of the lifting attachment have been arranged to take place under direction by a mini-valve or an equivalent electric directional valve pair, applying exclusively the output from the mini-pump.

It should further be pointed out that the larger pump, of which the output $V_1$ is preferably $V_1 \approx 16...22 \, cm^3/r$, is meant for the external hydraulics and the rapid lifting action of the lifting attachment, while the smaller pump, of which the output $V_o$ is preferably $V_o \approx 4...6 \, cm^3/r$, is meant for the traction resistance control and leakage compensation, in which connection the required pump output is only about 20% of the total oil quantity. The operation of the traction resistance control takes place by using the mini-pump 3 and the mini-valve 9.

In the following is presented a calculation example of the power savings ($\Delta P$) afforded by the invention when the tractor is driven at average ploughing speed (n = 2000 r.p.m).

$$\Delta P = \frac{P \cdot Q}{\eta}$$

$$\Delta Q = n \times (V_1 - V_o)$$

$P \approx 8$ MPa (pressure during control)

$\Delta Q = (40-8)$ 1/min $= 32$ 1/min (output on free circulation during control)

$\eta = 0.8$ overall efficiency

$n = 2000$ r.p.m.

$$P = \frac{8 \text{MPa} \cdot 32 \text{ 1/min}}{0,8} = 5,3 \text{ kW}$$

The essential advantage afforded by the invention is that the power that is saved is at disposal at the highest values of traction resistance to assist in towing the working implement.

As the detailed calculation example shows, essential saving of power is achieved thanks to the invention exactly at those times when most often the largest amount of tractor power is needed to pull the work implement, for instance the ploughs.

According to an advantageous embodiment of the invention, manipulation of the lifting attachment from the tractor's rear is performed with the rear controls, electrically and running the mini-pump with a small solenoid valve. This contributes to increased work safety and ease in connecting the work implements because the lifting movements will now be quite placid.

In a tractor provided with a hydraulic system as taught by this invention, when the work implement is raised for instance at the end of a land or when the hydraulic output is directed by a manual directional valve to supply the external hydraulics, the outputs from both pumps are automatically combined when the mini-valve (a small two-magnet solenoid valve) or the equivalent on/off electric directional valve pair is properly connected.

The hydraulic system of the invention is advantageously applicable in a tractor's automatic control system, whereof as an example is referred to the same applicant's Finnish patent application No. 823777 (inventor: Hannu Hannukainen). In the control system in question is measured the position of the lifting attachment and the traction resistance, by pick-ups, and with the signals obtained from these pick-ups the said mini-valve is controlled. The actual value signals from the pick-ups are weighted with appropriate factors, and the signal thus obtained is compared with the control value (the set-point value). If the control deviation thus found exceeds the "dead zone" that has been set in the system, the said mini-valve will be switched to lift or lower, depending on the plus or minus sign of the control deviation.

The above-mentioned mini-valve may be replaced with two on/off electric directional valves, one of them being the free circulation and lifting valve and the other, the holding or lowering valve.

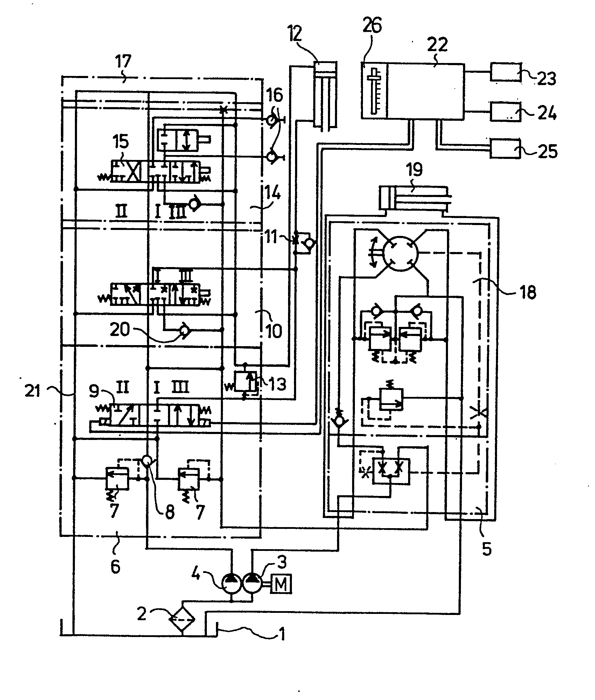

In the following, the invention is briefly described, with reference being made to an embodiment example of the invention, presented in the figure of the attached drawing, to the details of which the invention is in no way narrowly confined.

As revealed in the figure, the system comprises two pumps driven by the tractor engine M and mutually connected in parallel in a certain way: a larger pump 3 (the main pump), and a mini-pump 4, the intake sides of both pumps connected over an intake filter to one and the same oil tank 1. The pumps 3 and 4 have been connected in the manner shown in the figure by valve means to the lifting cylinder 12 and to the tractor wheel steering cylinder 19. The hydraulic system is governed by the control automatics 22, the actions of this unit in its turn being controlled by the position pick-up 23 in the lifting attachment, the traction resistance pick-up 24 and the rear controls 25, the last-mentioned allowing lifting and lowering of the three-point lifting means to be actuated electrically from the rear of the tractor with ease and safety.

In the following is described, with reference to the figure, the construction and operation of the hydraulic system in its different valve positions.

As shown in the figure, when the directional valves 9, 10 and 14 are in centre position (position I), the output of the mini-pump 4 flows in free circulation through the pump end 6 and through the valves mnentioned, through the tank end 17 without pressure into the tank 1 through the connector 21. Likewise, the output flow of the bigger pump 3 is on free circulation when the steering valve 18 and the directional valves 10 and 14 are in centre position; through the priority valve 5, the pump end 6 and the directional valves 10 and 14 through the tank end 17 without pressure into the tank 1. The cylinder paths of valves 9 and 10 are closed, and the tractor's lifting attachment is in the holding position.

When a lifting movement of the cylinder 12 of the lifting attachment is desired, the main governor valve 10 is moved into lifting position (valve stem position II). The free circulation passage of valve 10 closes, and the outputs from both pumps 3 and 4 become directed through the countervalve 20 to the cylinder connection on the main governor valve 10 and thence to the lifting cylinder 12. It is possible by the main governor valve 10 to regulate steplessly the oil quantity that is being directed to the cylinder 12, whereby at all times the desired lifting speed is attained.

When the main governor valve 10 is moved into the lowering position (valve stem position III), a lowering movement of the lifting cylinder 12 is obtained, and the oil flows from the cylinder 12 through the constant flow regulator valve 11 to the return passage of the main governor valve 10 and thence straight through the connector 21 into the tank 1. With the valve 10 in the lowering position, the outputs of both pumps 3 and 4 flow in free circulation through the tank end 17 without pressure into the tank 1. If the valve 10 is fully open, the maximum lowering speed may be limited with the constant flow regulator valve 11 to be as desired, and this lowering speed can be made independent of the load borne by the lifting attachment.

When the traction resistance control system is in use, the output of the mini-pump 4 goes to the two-magnet electric directional valve 9. On increase of the traction resistance past the control value, the control automatics 22 switch the magnetic valve 9 to the lifting position, and the output $Q$ from the mini-valve 4 goes to the lifting cylinder 12. The size of the mini-pump 4 has been chosen so that a smooth enough lifting correction is obtained. The output $Q_o$ of the mini-pump 4 is preferably about 20% of the combined total output $Q_o + Q_1$ of the pumps 3 and 4. The output $Q_1$ of the larger pump 3 flows during the lifting correction on free circulation back to the tank 1, the power saved in this connection being freely usable e.g. towards pulling the work implement.

In the event of diminishing traction resistance, the control automatics 22 move the mini-valve 9 into the lowering position (valve stem position III) and the lifting cylinder 12 lowers to the position determined by the position control, the valve 9 then returning to its centre position (valve stem position I). The control automatics 22 may be used to select the ratio in which (the weighting factor with which) the measured quantities of position pick-up 23 and traction force pick-up 24 are taken into account in the control event.

In the transport position likewise only the output $Q_o$ of the mini-pump 4 and the valve 9 are used towards leakage compensation. When the lifting attachment has been lowered down below the value determined by position control, the valve 9 becomes switched to lifting position, and nothing but the output $Q_o$ of the mini-pump 4 is directed to the lifting cylinder. Hereby a smooth enough lifting correction during transport is achieved.

Whenever highly accurate position control is desired, the control of the lifting attachment may be performed with the position
control potentiometer 26 appended to the control automatics. When
the control automatics are switched on, the position of the lifting
attachment is determined in accordance with the setting of the
potentiometer 26.

Shifting the potentiometer 26 in the lifting direction causes the
mini-valve 9 to go into the lifting position, and the output $Q_o$ of
the mini-pump 4 will go to the lifting cylinder 12. When the
lifting attachment has reached the position defined by the
potentiometer 26, the valve 9 returns to the holding position.

Shifting the potentiometer 26 in the lowering direction causes the
mini-valve 9 to go into the lowering position, and the oil flows
from the cylinder 12 through the constant flow regulator valve 11
to the return passage of the valve 9 and thence straight through
the connector 21 into the tank 1. When the lifting attachment
reaches the position defined by the potentiometer, the valve 9
returns to its holding position. It is possible to perform the
lifting attachment managing by the aid of the valve 9 fully
simultaneously with control of the external hydraulics, since the
pressure sides of the hydraulic circuits are mutually separated.

Furthermore, control of the lifting attachment may be managed
electrically from the rear of the tractor by using the mini-pump 4
and the solenoid valve 9. This facilitates the coupling to the
three-point attachment especially of big work implements. It is
conducive to higher work safety because the lifting movements are
calm when the mini-pump 4 is used. Fast lifting movements are only
possible by control from the driver's cab, using the main governor
valve 10.

The manual directional valve 14 is meant for external hydraulics.
When the solenoid valve 9 is in the centre position I, the outputs
$Q_o + Q_1$ of both pumps 3 and 4 can be directed into the external
hydraulics by shifting the stem of the valve 14 out of its centre
position. When the shift valve 15 is in the position shown in the
figure (its flow paths closed), the valve 14 is double-acting. When the flow paths of valve 15 are open, the valve 14 is single-acting.

When the tractor travel steering valve 18 is turned, the priority valve 5 will control part of the output $Q_1$ of the larger pump 3 to go to the steering valve 18. The quantity of this controlled output depends on how fast the steering valve 18 is turned, and at maximum it is for instance about 10 l/min. When using the priority valve 5, one needs no separate pump for the steering hydraulics, and the tractor's steering characteristics will not vary when the engine r.p.m. fluctuates.

In the foregoing merely one embodiment example of the invention has been described, of which the details may vary in many respects. One important variant of the invention deviating from that which has been presented above is that in which the mini-valve 9 has been replaced with two on/off electric directional valves. One of these is a slide valve serving as free circulation and lifting valve and the other is a seat valve performing the tasks of holding or lowering valve. By this valve arrangement it is intended to ensure freedom of leakage of the lifting attachment when heavy loads are being transported.

In certain cases a variant of the invention differing from that described in the foregoing is conceivable among others which, in that position where in the figure the main governor valve 10 has been indicated, has instead the trailer brake valve, while the main governor valve 10 has been moved one position "farther out".

In the following are stated the claims, different details of the invention being allowed to vary within the scope of the inventive idea thereby defined.

0108347

## Claims

1. A hydraulic system for a tractor or equivalent, comprising hydraulic pumps (3,4) driven by the tractor's engine (M) and their intake sides connected over an intake filter (2) or equivalent to an oil tank (1), and said system comprising a valve mechanism (5,7,8,9,10,11,13,14,15) by mediation of which the hydraulic pumps (3,4) are connected to the lifting cylinder (12) of the tractor's three-point lifting attachment or equivalent, characterized in that:-

the hydraulic system comprises at least two hydraulic pumps (3,4) which have been connected mainly in parallel,

one of said hydraulic pumps is a mini-pump (4) and the other larger one is a main pump (3), the output of the latter pump (3) being several times the output of the said mini-pump (4), and

the functions governed by the tractor's control automatics (22,23,24) and/or the functions (25) based on lifting attachment manipulation from the rear of the tractor and/or leakage compensation of the lifting cylinder have been arranged to take place under control by a mini-valve (9) or an equivalent on/off electric directional valve pair, using exclusively the output of the mini-pump (4).

2. Hydraulic system according to claim 1, characterized in that the combined outputs of both pumps (3,4) can through a main governor valve (10) or equivalent be directed to the lifting cylinders (12) of the tractor's lifting attachment.

3. Hydraulic system according to claim 1 or 2, characterized in that the output ($Q_o$) of the mini-pump (4) is about 15 to 30%, preferably about 30% of the output ($Q_1$) of the larger pump (3).

4. Hydraulic system according to claim 1, 2 or 3, connected over a steering valve (18) to the actuating cylinder (19) of the hydraulic steering for the tractor's wheels, characterized in that said steering valve (18) has over a priority valve (5) been connected to the larger main pump (3) so that on the basis of the position of the steering valve (18) a larger part of the output of the larger pump (3) is directed through the steering valve (18) to the actuating cylinder (19) of the hydraulic steering.

5. Hydraulic system according to any one of claims 1-4, in which is used a traction resistance control system and control automatics, characterized in that the output of the mini-pump (4) has been conducted through said mini-valve (9), in which capacity serves a two-magnet electric directional valve, to the lifting cylinder (12) so that on increase of the traction resistance past the control value, the control automatics (22) switch the said mini-valve into the lifting position so that the output ($Q_o$) of the mini-pump will flow to the lifting cylinder (12) and that in this event the output ($Q_1$) of the larger main pump (3) has been connected to free circulation so that the power drawn by the main pump (3) is available e.g. for pulling the work implement.

6. Hydraulic system according to any one of claims 1-5, characterized in that the system comprises a manual directional valve (14) for external hydraulics, so disposed that the outputs ($Q_o + Q_1$) of both pumps (3,4) can be directed into the external hydraulics.

7. Hydraulic system according to any one of claims 1-6, characterized in that the output ($Q_o$) of the mini-pump (4) can be directed to the lifting cylinder (12) and the output ($Q_1$) of the main pump (3) can be directed to external hydraulics both at the same time.

8. Hydraulic system according to any one of claims 1-7, characterized in that said mini-valve (9) is an electric directional valve with two magnets.

9. Hydraulic system according to any one of claims 1-8, characterized in that instead of said mini-valve (9) are used two on/off electric directional valves, one of them a slide valve serving as free circulation and lifting valve and the other a seat
valve serving as holding/lowering valve, the aim being to ensure
the lifting attachment´s fredom of leakage when transporting heavy
loads suspended from the three-point lifting attachment.

10. Hydraulic system according to any one of claims 1-9,
characterized in that in the position of the main governor valve
(10) is provided the brake valve for a trailer, and the main
governor valve (10) has been moved one position outward from the
above-mentioned placement.

0108347

**European Patent Office**

**EUROPEAN SEARCH REPORT**

Application number

EP 83 11 0758

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-B-1 557 868 (VEB KOMBINAT ORSTA HYDRAULIK) * Column 1, line 62 - column 4, line 15; figure 1 * | 1,5 | A 01 B 63/10 F 15 B 13/09 |
| D,Y | GB-A-2 070 693 (SAME) * Page 1, line 90 - page 2, line 58; figur 1 * | 1,2 | |
| Y | DE-B-1 215 421 (MASCHINENFABRIK J. BUCHER) * Column 1, line 52 - page 5, line 56; figure 1 * | 1,2,5 | |
| A | FR-A-2 444 397 (INTERNATIONAL HARVESTER) | | |

TECHNICAL FIELDS SEARCHED (Int. Cl. 3)

A 01 B 63/10
F 15 B 13/00

The present search report has been drawn up for all claims

| Place of search BERLIN | Date of completion of the search 11-01-1984 | Examiner BERGZOLL M C |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82